(19) Europäisches Patentamt
European Patent Office
Office européen des brevets

(11) **EP 4 671 809 A1**

(12) **EUROPEAN PATENT APPLICATION**

(43) Date of publication:
**31.12.2025 Bulletin 2026/01**

(21) Application number: **25180276.5**

(22) Date of filing: **02.06.2025**

(51) International Patent Classification (IPC):
**G01S 7/35** (2006.01) **G01S 13/34** (2006.01)
**G01S 13/88** (2006.01)

(52) Cooperative Patent Classification (CPC):
**G01S 13/882; G01S 7/354; G01S 13/34**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.06.2024 US 202418754703**

(71) Applicant: **Honeywell International Inc.
Charlotte, NC 28202 (US)**

(72) Inventors:
• **KEJIK, Petr
Charlotte, 28202 (US)**
• **DOBES, Michal
Charlotte, 28202 (US)**
• **FRICK, Seth T.
Charlotte, 28202 (US)**
• **VAISPACHER, Tomas
Charlotte, 28202 (US)**
• **BARANEK, Radek
Charlotte, 28202 (US)**
• **SOPATA, Milan
Charlotte, 28202 (US)**

(74) Representative: **Haseltine Lake Kempner LLP
Cheapside House
138 Cheapside
London EC2V 6BJ (GB)**

(54) **INTERPOLATION TECHNIQUES FOR IMPROVED RADAR DISTANCE MEASUREMENT RESOLUTION**

(57) Techniques are provided which enhance accuracy of determining a distance between a body, *e.g.,* of vehicle, (or a radar thereof) to a surface. Accuracy is improved by more accurately interpolating an estimated distance between the body and the surface. For example, a VTOL, such as a UAM, can more accurately determine its altitude over a surface of terrain or structure. Hence, risk of harm, to the VTOL aircraft and/or its passengers and/or cargo, is diminished.

FIG. 1

EP 4 671 809 A1

## Description

### BACKGROUND

Vertical Takeoff and Landing (VTOL) aircraft, including unmanned aerial vehicles (UAVs), are becoming increasingly used for commercial and military applications. Navigation accuracy is critical for VTOL aircraft when landing. Conventional navigation sensors including global navigation satellite system receiver(s), inertial navigation system(s), barometric altimeter(s), and radar altimeter(s) provide insufficient accuracy, particularly in an urban environment, with respect to an altitude of the VTOL aircraft above a surface. Lack of accuracy can result in harm to the VTOL aircraft and/or its passengers and/or cargo, for example due to a hard landing.

### SUMMARY

In some aspects, the techniques described herein relate to a method for more accurately determining a distance from a body to a surface of another entity, the method including: receiving a reflected signal, wherein the reflected signal is a portion of a transmitted signal reflected from the surface; using the reflected signal and a signal representative of the transmitted signal, generating a beat signal; transforming the beat signal from a time domain to a frequency domain including bins each of which has a complex value and represents a unique range of distances; selecting, from leading edge bins of the bins, a primary leading edge bin which is a single bin representing a portion of the surface which is closest to the body, wherein the leading edge bins represent at least a portion of the surface; determining an interpolated distance between the surface and the body by interpolating within the primary leading edge bin using a magnitude of the complex value or the complex value of each of: the primary leading edge bin and at least each bin adjacent to the primary leading edge bin; and either: (a) obtaining at least one interpolation correction value; and obtaining the distance by adjusting the interpolated distance with the at least one interpolation correction value; or (b) wherein determining the interpolated distance includes obtaining the at least one interpolation correction value and performing interpolation using the at least one interpolation correction value; wherein the interpolated distance is the distance.

In some aspects, the techniques described herein relate to a non-transitory computer readable medium storing a program causing at least one processor to execute a process for more accurately determining a distance from a body to a surface of another entity, the process including: transforming a beat signal from a time domain to a frequency domain including bins each of which has a complex value and represents a unique range of distances, wherein the beat signal is generated using a reflected signal and a signal representative of a transmitted signal, wherein the reflected signal is a portion of the transmitted signal reflected from the surface; selecting, from leading edge bins of the bins, a primary leading edge bin which is a single bin representing a portion of the surface which is closest to the body, wherein the leading edge bins represent at least a portion of the surface; determining an interpolated distance between the surface and the body by interpolating within the primary leading edge bin using a magnitude of the complex value or the complex value of each of: the primary leading edge bin and at least each bin adjacent to the primary leading edge bin; and either: (a) obtaining at least one interpolation correction value; and obtaining the distance by adjusting the interpolated distance with the at least one interpolation correction value; or (b) wherein determining the interpolated distance includes obtaining the at least one interpolation correction value and performing interpolation using the at least one interpolation correction value; wherein the interpolated distance is the distance.

In some aspects, the techniques described herein relate to an apparatus for more accurately determining a distance from a body to a surface of another entity, the apparatus including: a transmitter configured to emit a transmitted signal; a mixer circuit electrically coupled to the transmitter; at least one antenna electrically coupled to the transmitter and the mixer circuit; wherein the at least one antenna is configured to electromagnetically radiate the transmitted signal and receive a reflected signal, wherein the reflected signal is a portion of the transmitted signal reflected from the surface; wherein the mixer circuit is configured to generate a beat signal using the reflected signal and a signal representative of the transmitted signal; and processing circuitry electrically coupled to the mixer circuit and configured to: transform the beat signal from a time domain to a frequency domain including bins each of which has a complex value and represents a unique range of distances; select, from leading edge bins of the bins, a primary leading edge bin which is a single bin representing a portion of the surface which is closest to the body, wherein the leading edge bins represent at least a portion of the surface; determine an interpolated distance between the surface and the body by interpolating within the primary leading edge bin using a magnitude of the complex value or the complex value of each of: the primary leading edge bin and at least each bin adjacent to the primary leading edge bin; and either: (a) obtain at least one interpolation correction value; and obtain the distance by adjusting the interpolated distance with the at least one interpolation correction value; or (b) wherein determine the interpolated distance includes obtain the at least one interpolation correction value and perform interpolation using the at least one interpolation correction value; wherein the interpolated distance is the distance.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:

FIG. 1 illustrates a block diagram of one embodiment of a radar according to embodiments of the invention (or radar);

FIG. 2 illustrates a block diagram of one embodiment of a processing system;

FIG. 3 illustrates one embodiment of a method of more accurately determining a distance between a body, or a radar thereon and/or therein, and a surface;

FIG. 4 illustrates one embodiment of the reflected signal in the frequency domain;

FIG. 5 illustrates a diagram illustrating a non-linear interpolation around each of bin X and bin X+1 along a real bin number axis;

FIG. 6 illustrates one embodiment of a method of obtaining an interpolation correction value; and

FIG. 7 illustrates one embodiment of another method of obtaining an interpolation correction value.

In accordance with common practice, the various described features are not drawn to scale but are drawn to emphasize specific features relevant to the exemplary embodiments. Reference characters denote like elements throughout figures and text.

DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and electrical changes may be made. Furthermore, the method presented in the drawing figures and the specification is not to be construed as limiting the order in which the individual steps may be performed. The following detailed description is, therefore, not to be taken in a limiting sense.

Techniques are provided which enhance accuracy of determining a distance between a body, *e.g.,* of vehicle, (or a radar thereof) to a surface. For example, a VTOL, such as a UAM, can more accurately determine its altitude over a surface of terrain or structure. Hence, risk of harm, to the VTOL aircraft and/or its passengers and/or cargo, is diminished.

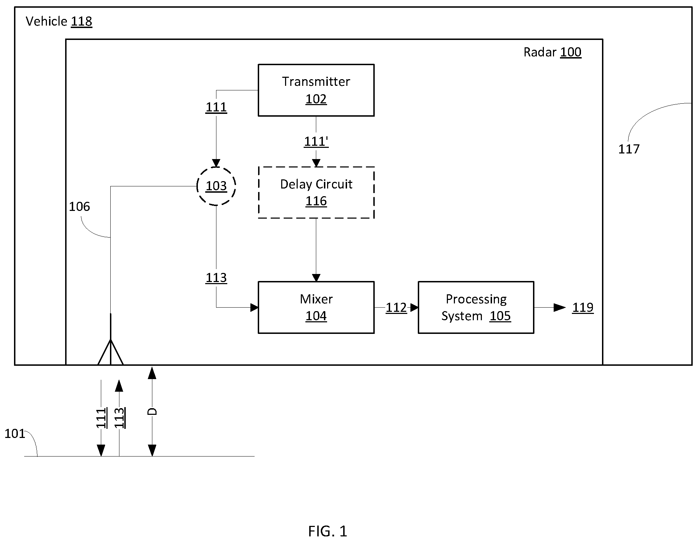

FIG. 1 illustrates a block diagram of one embodiment of a radar according to embodiments of the invention (or radar) 100. The radar 100 includes a transmitter 102, at least one antenna 106, a mixer 104, and a processing system (or processing circuitry) 105. Optionally, the radar 100 includes coupling circuitry 103, *e.g.,* a circulator, a transmit receive switch, a diplexer, or a duplexer. Optionally, the radar 100 includes a delay circuit 116. Optionally, the radar 100 may be mounted on and/or in a body 117 of a vehicle 118, an animal, or a human. Optionally, the vehicle 118 is an airborne, a seaborne, a land borne vehicle, or any other type of vehicle.

The transmitter 102 is configured to emit a transmitted frequency modulation (FM) continuous wave (CW) modulated signal or pulsed linear FM modulated signal (or transmitted signal) 111, and to provide such transmitted signal 111 to an antenna of the at least one antenna 106. The antenna of the at least one antenna 106 is configured to electromagnetically radiate the transmitted signal 111 to a surface 101 of terrain and/or a structure.

The surface 101 of the terrain and/or the structure reflects a portion of the transmitted signal (a reflected FM CW modulated signal or pulsed linear FM modulated signal or a reflected signal) 113 back to an antenna of the at least one antenna 106. The mixer 104 is configured to receive both a signal representative of the transmitted signal 111' from the transmitter 102 and the reflected signal 113. The mixer 104 is configured to output, or emit, a down converted signal 112. The mixer 104 may be a homodyne or a heterodyne mixer. When the mixer 104 is a homodyne mixer, the down converted signal 112 includes a beat frequency. A processing system (or processing circuitry) 105 is configured to receive the down converted signal 112. Optionally, the processing system 105 includes a down converter. When the mixer 104 is a heterodyne mixer, the down converter further down converts the down converted signal 112 to the beat frequency from which can be derived the distance D to the surface 101 from the radar 100, *e.g.,* the at least one antenna 106 of the radar 100.

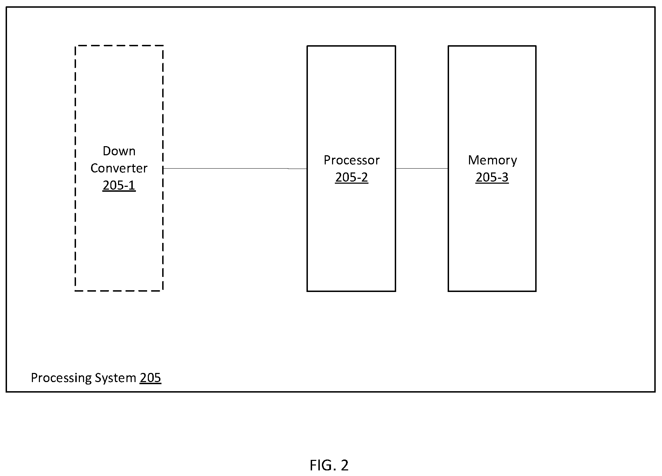

The processing system 105 may optionally be a state machine and/or a neural network. FIG. 2 illustrates a block diagram of one embodiment of a processing system 205. For purposes of clarity, the processing system 205 may be implemented in alternative ways. Optionally, the processing system 205 includes the optional down converter 205-1 configured to receive the down converted signal 112 and to provide a second down converted signal which includes the beat frequency from which can be derived the distance D to the surface 101 from the radar 100. The illustrated processing system 205 includes a processor (or processor circuitry) 205-2 electrically coupled to memory (or memory circuitry) 205-3. The processing system *205, e.g.,* the processor 205-2, is configured to receive the down converted signal 112, or the second down converted signal, including the beat frequency. The processing system 205, *e.g.,* the processor 205-2, is further configured to determine, using the beat frequency and techniques described elsewhere herein, a distance signal 119 representative of the distance D between the surface 101 from the radar 100. For example, when the radar 100 is mounted on an airborne vehicle and emits and receives signals to and from a surface 101, such distance D may be an altitude.

Returning to FIG. 1, the optional delay circuit 116 is utilized when the transmitter 102 utilizes pulsed linear FM modulation. U.S. Patent No. 10,274,596 describes another embodiment of a radar, *i.e.*, an FM CW radar, which may be modified to include embodiment(s) of the invention. U.S. Patent No. 10,274,596 is incorporated by reference herein in its entirety.

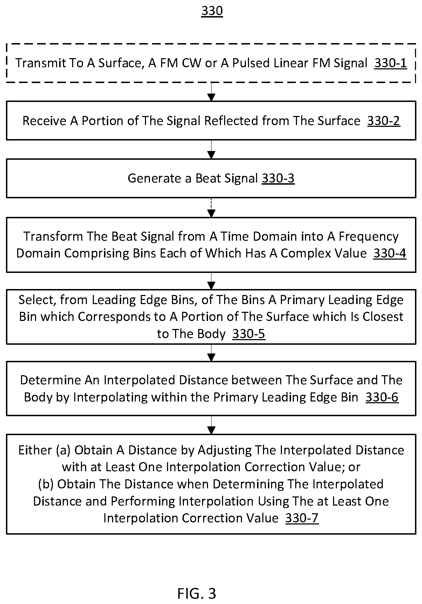

FIG. 3 illustrates one embodiment of a method 330 of more accurately determining a distance between a body, or a radar thereon and/or therein, and a surface. To the extent that the methods shown in any Figures are described herein as being implemented with any of the systems illustrated herein, it is to be understood that other embodiments can be implemented in other ways. Optionally, method 330 may be implemented by the apparatus described with respect to FIGS. 1 and 2.

The blocks of the flow diagrams have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

In optional block 330-1, a FM CW or a pulsed linear FM signal (or transmitted signal) is emitted by a radar in and/or on a body, *e.g.,* of a vehicle, a human, or an animal. Optionally, the vehicle is an airborne, a seaborne, a land borne, or any other type of vehicle. Optionally, the vehicle is a VTOL aircraft, *e.g.,* a UAM. In block 330-2, a portion of the transmitted signal is reflected by the surface and received by the radar in and/or on the body (received signal).

In block 330-3, a beat signal is generated using the reflected signal and a signal representative of the transmitted signal. In block 330-4, the beat signal is transformed from a time domain into a frequency domain comprising bins each of which has a complex value, *e.g.*, represented by in-phase and quadrature values. Each bin corresponds to a unique range of distances. Optionally, the transformation is performed by a Fourier transform, *e.g.*, a discrete Fourier transform.

In block 330-5, a primary leading edge bin is selected from leading edge bins, of the bins, which represent a portion of the surface. The leading edge bins represent at least a portion of the surface. Optionally, the leading edge bins are the bins closest to the body (or the radar in and/or on the body) which have a magnitude, *e.g.*, a signal to noise ratio (SNR), a power level, or an energy level, which exceeds a threshold level of the same parameter. The primary leading edge bin is a single bin of the leading edge bins which is closest to the body, or the radar in and/or on the body.

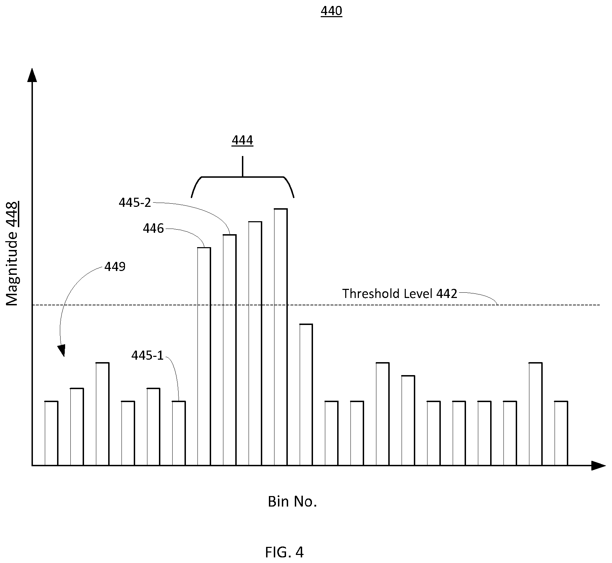

FIG. 4 illustrates one embodiment of the reflected signal in the frequency domain 440. The reflected signal in the frequency domain 440 includes a plurality of bins 449 each of which has a magnitude 448. The threshold level 442, the leading edge bins 444, and the primary leading edge bin 446 are illustrated. The primary leading edge bin 446 has a first adjacent bin 445-1 and a second adjacent bin 445-2.

Returning to FIG. 3, in block 330-6, an interpolated distance between the surface and the body, or the radar in and/or on the body, is determined by interpolating within the primary leading edge bin using a magnitude of the complex value or the complex value of each of: the primary leading edge bin and at least each bin adjacent to the primary leading edge bin. Optionally, the at least one bin adjacent to the primary leading edge bin includes the first and/or the second adjacent bins 445-1, 445-2; however, it may include at least one additional bin adjacent to the first adjacent bin 445-1, and/or at least one additional bin adjacent to the second adjacent 445-2. U.S. Patent No. 10,274,596 illustrates one method of interpolation; however, the interpolation technique described in U.S. Patent No. 10,274,596 provides insufficient accuracy for applications described elsewhere herein. U.S. Patent No. 10,274,596 is incorporated by reference herein in its entirety.

For pedagogical purposes, one type of interpolation will now be illustrated. However, other types of interpolation, *e.g.*, a Gaussian interpolation or a parabolic interpolation, may be used. One implementation of quadratic interpolation may be utilized as exemplified by the following equation:

$$\Delta bin = \text{real}\left( \frac{FFT(J-1) - FFT(J+1)}{2*FFT(J) - FFT(J-1) - FFT(J+1)} \right),$$

where:

| | |
|---|---|
| J | Number of the bin of the primary leading edge bin; |
| J + 1, J - 1 | Number of each bin adjacent to the primary leading edge bin; |
| FFT(J) | Complex value of primary leading edge bin J; |
| FFT(J - 1) | Complex value of bin J-1; |
| FFT(J + 1) | Complex value of bin J+1; and |
| Δbin | Bin adjustment to J (primary leading edge bin) |

The interpolated value is obtained by adjusting the primary leading edge bin with the bin adjustment.

Conventionally, interpolation techniques are used in FM CW radar to identify a distance associated with a maximum amplitude. However, because embodiments of the invention utilize such interpolation to determine a fraction of a leading edge bin, the interpolation techniques give rise to an error which can be compensated.

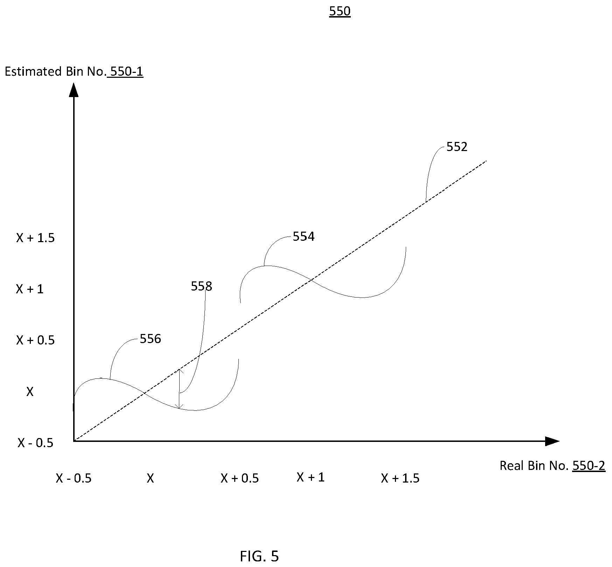

The interpolation typically has a non-linear response. As a result, the interpolated value has error. FIG. 5 illustrates a diagram illustrating a non-linear interpolation 550 around each of bin X and bin X+1 along a real bin number axis. The x-axis is the real bin number axis 550-2. The y-axis is the estimated bin number axis 550-1.

A nonlinear interpolation 556 around bin X along the real bin number axis 550-2 and a nonlinear interpolation 554 around bin X+1 along the real bin number axis 550-2 each deviate, from a linear bin relationship 552, on the estimated bin number axis 550-1 by an interpolation correction value 558. Such deviation results in an error in a determined distance between the body (or radar on and/or in the body) and the surface, and if not corrected, can result in harm as discussed elsewhere herein. Such deviation (or error) may be corrected by adjusting the interpolated distance with an interpolation correction value 558.

Returning to FIG. 3, in block 330-7, either (a) at least one interpolation correction value is obtained; and the distance is obtained by adjusting the interpolated distance with the at least one interpolation correction value; or (b) the interpolated distance is determined including by obtaining the at least one interpolation correction value and performing interpolation using the at least one interpolation correction value, and the interpolated distance is the distance. Utilizing the interpolation correction value, an accuracy of the distance between the body (or the radar on and/or in the body) may be improved to be a fraction of one foot. Optionally, obtaining and using the at least one interpolation correction value only occurs upon at least one of: the distance between the surface and the body is less than a distance threshold value and the body is taking off or landing.

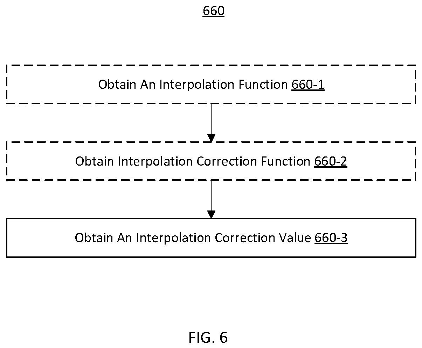

Optionally, the interpolation correction value may be obtained as follows; however, the interpolation correction value may be obtained other ways for example using a look up table, an inverse function for monotonic function(s) (*e.g.*, which represent what contents of a look up table), etc. FIG. 6 illustrates one embodiment of a method 660 of obtaining an interpolation correction value. To the extent that the methods shown in any Figures are described herein as being implemented with any of the systems illustrated herein, it is to be understood that other embodiments can be implemented in other ways. Optionally, method 660 may be implemented by the apparatus described with respect to FIGS. 1 and 2.

In optional block 660-1, an interpolation function is obtained. Optionally, the interpolation function may be obtained by fitting interpolation data from within one or more ranges of bins to a function, *e.g.,* a non-linear function, for example a polynomial function.

In optional block 660-2, an interpolation correction function is obtained by taking a difference between a linear bin relationship and the interpolation function. For the interpolation correction function, an independent variable is the interpolated distance determined in block 330-5 and a dependent variable is the interpolation correction value. In block 660-3, using the interpolated distance, the interpolation correction value is determined using the interpolation correction function.

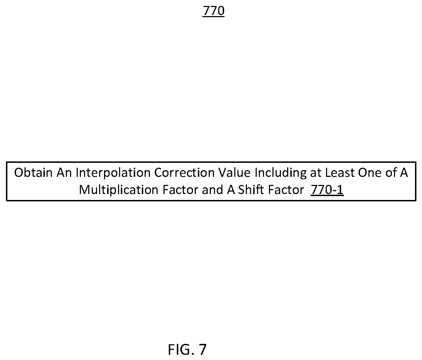

FIG. 7 illustrates one embodiment of another method 770 of obtaining an interpolation correction value. To the extent that the methods shown in any Figures are described herein as being implemented with any of the systems illustrated herein, it is to be understood that other embodiments can be implemented in other ways. Optionally, method 770 may be implemented by the apparatus described with respect to FIGS. 1 and 2.

In block 770-1, using the interpolated distance, an interpolation correction value including at least one of a multiplication factor and a shift factor are obtained. Optionally, the multiplication factor and the shift factor may be obtained using a look up table or an inverse function for monotonic functions, *e.g.*, which represents the look up table, and providing the interpolated value thereto. Obtaining the distance in block 330-7 by adjusting the interpolated distance with the at least one interpolation correction value includes multiplying the interpolated distance by the multiplication factor to create a product, and/or adding the shift factor to either the product or to the interpolated distance.

The processor circuitry described herein may include one or more microprocessors, microcontrollers, digital signal processing (DSP) elements, application-specific integrated circuits (ASICs), and/or field programmable gate arrays (FPGAs). In this exemplary embodiment, processor circuitry includes or functions with software programs, firmware, or other computer readable instructions for carrying out various process tasks, calculations, and control functions, used in the methods described herein. These instructions are typically tangibly embodied on any storage media (or computer readable medium) used for storage of computer readable instructions or data structures.

The memory circuitry described herein can be implemented with any available storage media (or computer readable medium) that can be accessed by a general purpose or special purpose computer or processor, or any programmable logic device. Suitable computer readable medium may include storage or memory media such as semiconductor, magnetic, and/or optical media. For example, computer readable media may include conventional hard disks, Compact Disk - Read Only Memory (CD-ROM), DVDs, volatile or non-volatile media such as Random Access Memory (RAM) (including, but not limited to, Dynamic Random Access Memory (DRAM)), Read Only Memory (ROM), Electrically Erasable Programmable ROM (EEPROM), and/or flash memory. Combinations of the above are also included within the scope of computer readable media.

Methods of the invention can be implemented in computer readable instructions, such as program modules or applications, which may be stored in the computer readable medium that is part of (optionally the memory circuitry) or communicatively coupled to the processing circuitry, and executed by the processing circuitry, optionally the processor circuitry. Generally, program modules or applications include routines, programs, objects, data components, data structures, algorithms, and the like, which perform particular tasks or implement particular abstract data types.

Terms of relative position as used in this application are defined based on a plane parallel to, or in the case of the term coplanar - the same plane as, the conventional plane or working surface of a layer, wafer, or substrate, regardless of orientation. The term "horizontal" or "lateral" as used in this application are defined as a plane parallel to the conventional plane or working surface of a layer, wafer, or substrate, regardless of orientation. The term "vertical" refers to a direction perpendicular to the horizontal. Terms such as "on," "side" (as in "sidewall"), "higher," "lower," "over," "top," and "under" are defined with respect to the conventional plane or working surface being on the top surface of a layer, wafer, or substrate, regardless of orientation. The term "coplanar" as used in this application is defined as a plane in the same plane as the conventional plane or working surface of a layer, wafer, or substrate, regardless of orientation.

Exemplary Embodiments

Example 1 includes a method for more accurately determining a distance from a body to a surface of another entity, the method comprising: receiving a reflected signal, wherein the reflected signal is a portion of a transmitted signal reflected from the surface; using the reflected signal and a signal representative of the transmitted signal, generating a beat signal; transforming the beat signal from a time domain to a frequency domain comprising bins each of which has a complex value and represents a unique range of distances; selecting, from leading edge bins of the bins, a primary leading edge bin which is a single bin representing a portion of the surface which is closest to the body, wherein the leading edge bins represent at least a portion of the surface; determining an interpolated distance between the surface and the body by interpolating within the primary leading edge bin using a magnitude of the complex value or the complex value of each of: the primary leading edge bin and at least each bin adjacent to the primary leading edge bin; and either: obtaining at least one interpolation correction value; and obtaining the distance by adjusting the interpolated distance with the at least one interpolation correction value; or wherein determining the interpolated distance comprises obtaining the at least one interpolation correction value and performing interpolation using the at least one interpolation correction value; wherein the interpolated distance is the distance.

Example 2 includes the method of Example 1, wherein the leading edge bins are at least two bins which are closest to the surface and each of which has a magnitude which exceeds a threshold value.

Example 3 includes the method of any of Examples 1-2, wherein the interpolating utilizes quadratic interpolation, Gaussian interpolation, or a parabolic interpolation.

Example 4 includes the method of any of Examples 1-3, wherein the at least one interpolation correction value comprises at least one of a multiplication factor and a shift factor; wherein obtaining the distance by adjusting the interpolated distance with the at least one interpolation correction value comprises multiplying the interpolated distance by the multiplication factor to create a product, and/or adding the shift factor to either the product or to the interpolated distance.

Example 5 includes the method of any of Examples 1-4, wherein the obtaining and the using of the at least one interpolation correction value only occurs upon at least one of: the distance between the surface and the body is less than a distance threshold value and the body is taking off or landing.

Example 6 includes the method of any of Examples 1-5, further comprising transmitting to the surface the transmitted signal which is a frequency modulated (FM) continuous wave (CW) or a pulsed linear FM signal.

Example 7 includes the method of any of Examples 1-6, wherein using the interpolated distance, the at least one interpolation correction value is determined using an interpolation correction function; wherein the interpolation correction function is obtained by taking a difference between (i) a function representing interpolated data over one or more ranges of bins and (ii) a linear bin relationship.

Example 8 includes a non-transitory computer readable medium storing a program causing at least one processor to execute a process for more accurately determining a distance from a body to a surface of another entity, the process comprising: transforming a beat signal from a time domain to a frequency domain comprising bins each of which has a complex value and represents a unique range of distances, wherein the beat signal is generated using a reflected signal and a signal representative of a transmitted signal, wherein the reflected signal is a portion of the transmitted signal reflected from the surface; selecting, from leading edge bins of the bins, a primary leading edge bin which is a single bin representing a portion of the surface which is closest to the body, wherein the leading edge bins represent at least a portion of the surface; determining an interpolated distance between the surface and the body by interpolating within the primary leading edge bin using a magnitude of the complex value or the complex value of each of: the primary leading edge bin and at least each bin adjacent to the primary leading edge bin; and either: obtaining at least one interpolation correction value; and obtaining the distance by adjusting the interpolated distance with the at least one interpolation correction value;

or wherein determining the interpolated distance comprises obtaining the at least one interpolation correction value and performing interpolation using the at least one interpolation correction value; wherein the interpolated distance is the distance.

Example 9 includes the non-transitory computer readable medium of Example 8, wherein the leading edge bins are at least two bins which are closest to the surface and each of which has a magnitude which exceeds a threshold value.

Example 10 includes the non-transitory computer readable medium of any of Examples 8-9, wherein the interpolating utilizes quadratic interpolation, Gaussian interpolation, or a parabolic interpolation.

Example 11 includes the non-transitory computer readable medium of any of Examples 8-10, wherein the at least one interpolation correction value comprises at least one of a multiplication factor and a shift factor; wherein obtaining the distance by adjusting the interpolated distance with the at least one interpolation correction value comprises multiplying the interpolated distance by the multiplication factor to create a product, and/or adding the shift factor to either the product or to the interpolated distance.

Example 12 includes the non-transitory computer readable medium of any of Examples 8-11, wherein the obtaining and the using of the at least one interpolation correction value only occurs upon at least one of: the distance between the surface and the body is less than a distance threshold value and the body is taking off or landing.

Example 13 includes the non-transitory computer readable medium of any of Examples 8-12, wherein using the interpolated distance, the at least one interpolation correction value is determined using an interpolation correction function; wherein the interpolation correction function is obtained by taking a difference between (i) a function representing interpolated data over one or more ranges of bins and (ii) a linear bin relationship.

Example 14 includes an apparatus for more accurately determining a distance from a body to a surface of another entity, the apparatus comprising: a transmitter configured to emit a transmitted signal; a mixer circuit electrically coupled to the transmitter; at least one antenna electrically coupled to the transmitter and the mixer circuit; wherein the at least one antenna is configured to electromagnetically radiate the transmitted signal and receive a reflected signal, wherein the reflected signal is a portion of the transmitted signal reflected from the surface; wherein the mixer circuit is configured to generate a beat signal using the reflected signal and a signal representative of the transmitted signal; and processing circuitry electrically coupled to the mixer circuit and configured to: transform the beat signal from a time domain to a frequency domain comprising bins each of which has a complex value and represents a unique range of distances; select, from leading edge bins of the bins, a primary leading edge bin which is a single bin representing a portion of the surface which is closest to the body, wherein the leading edge bins represent at least a portion of the surface; determine an interpolated distance between the surface and the body by interpolating within the primary leading edge bin using a magnitude of the complex value or the complex value of each of: the primary leading edge bin and at least each bin adjacent to the primary leading edge bin; and either: obtain at least one interpolation correction value; and obtain the distance by adjusting the interpolated distance with the at least one interpolation correction value; or wherein determine the interpolated distance comprises obtain the at least one interpolation correction value and perform interpolation using the at least one interpolation correction value; wherein the interpolated distance is the distance.

Example 15 includes the apparatus of Example 14, wherein the leading edge bins are at least two bins which are closest to the surface and each of which has a magnitude which exceeds a threshold value.

Example 16 includes the apparatus of any of Examples 14-15, wherein the interpolating utilizes quadratic interpolation, Gaussian interpolation, or a parabolic interpolation.

Example 17 includes the apparatus of any of Examples 14-16, wherein the at least one interpolation correction value comprises at least one of a multiplication factor and a shift factor; wherein obtain the distance by adjusting the interpolated distance with the at least one interpolation correction value comprises multiply the interpolated distance by the multiplication factor to create a product, and/or add the shift factor to either the product or to the interpolated distance.

Example 18 includes the apparatus of any of Examples 14-17, wherein the obtaining and the using of the at least one interpolation correction value only occurs upon at least one of: the distance between the surface and the body is less than a distance threshold value and the body is taking off or landing.

Example 19 includes the apparatus of any of Examples 14-18, wherein the transmitted signal is a frequency modulated (FM) continuous wave (CW) or a pulsed linear FM signal.

Example 20 includes the apparatus of any of Examples 14-19, wherein using the interpolated distance, the at least one interpolation correction value is determined using an interpolation correction function; wherein the interpolation correction function is obtained by taking a difference between (i) a function representing interpolated data over one or more ranges of bins and (ii) a linear bin relationship.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method for more accurately determining a distance from a body to a surface of another entity, the method comprising:

   receiving a reflected signal, wherein the reflected signal is a portion of a transmitted signal reflected from the surface;
   using the reflected signal and a signal representative of the transmitted signal, generating a beat signal;
   transforming the beat signal from a time domain to a frequency domain comprising bins each of which has a complex value and represents a unique range of distances;
   selecting, from leading edge bins of the bins, a primary leading edge bin which is a single bin representing a portion of the surface which is closest to the body, wherein the leading edge bins represent at least a portion of the surface;
   determining an interpolated distance between the surface and the body by interpolating within the primary leading edge bin using a magnitude of the complex value or the complex value of each of: the primary leading edge bin and at least each bin adjacent to the primary leading edge bin; and
   either:

      (a) obtaining at least one interpolation correction value; and
      obtaining the distance by adjusting the interpolated distance with the at least one interpolation correction value; or
      (b) wherein determining the interpolated distance comprises obtaining the at least one interpolation correction value and performing interpolation using the at least one interpolation correction value;
      wherein the interpolated distance is the distance.

2. The method of claim 1, wherein the leading edge bins are at least two bins which are closest to the surface and each of which has a magnitude which exceeds a threshold value.

3. The method of claims 1-2, wherein the at least one interpolation correction value comprises at least one of a multiplication factor and a shift factor;
   wherein obtaining the distance by adjusting the interpolated distance with the at least one interpolation correction value comprises multiplying the interpolated distance by the multiplication factor to create a product, and/or adding the shift factor to either the product or to the interpolated distance.

4. The method of claims 1-3, wherein the obtaining and the using of the at least one interpolation correction value only occurs upon at least one of: the distance between the surface and the body is less than a distance threshold value and the body is taking off or landing.

5. The method of claims 1-4, wherein using the interpolated distance, the at least one interpolation correction value is determined using an interpolation correction function;
   wherein the interpolation correction function is obtained by taking a difference between (i) a function representing interpolated data over one or more ranges of bins and (ii) a linear bin relationship.

6. An apparatus for more accurately determining a distance from a body to a surface of another entity, the apparatus comprising:

   a transmitter configured to emit a transmitted signal;
   a mixer circuit electrically coupled to the transmitter;
   at least one antenna electrically coupled to the transmitter and the mixer circuit;

   wherein the at least one antenna is configured to electromagnetically radiate the transmitted signal and receive a reflected signal, wherein the reflected signal is a portion of the transmitted signal reflected from the surface;

   wherein the mixer circuit is configured to generate a beat signal using the reflected signal and a signal representative of the transmitted signal; and
   processing circuitry electrically coupled to the mixer circuit and configured to:

      transform the beat signal from a time domain to a frequency domain comprising bins each of which has a complex value and represents a unique range of distances;
      select, from leading edge bins of the bins, a primary leading edge bin which is a single bin representing a portion of the surface which is closest to the body, wherein the leading edge bins represent at least a portion of the surface;
      determine an interpolated distance between the surface and the body by interpolating within the primary leading edge bin using a magnitude of the complex value or the complex value of each of: the primary leading edge bin and at least each bin adjacent to the primary leading edge bin; and

either:

(a) obtain at least one interpolation correction value; and
obtain the distance by adjusting the interpolated distance with the at least one interpolation correction value; or
(b) wherein determine the interpolated distance comprises obtain the at least one interpolation correction value and perform interpolation using the at least one interpolation correction value;
wherein the interpolated distance is the distance.

7.  The apparatus of claim 6, wherein the leading edge bins are at least two bins which are closest to the surface and each of which has a magnitude which exceeds a threshold value.

8.  The apparatus of claims 6-7, wherein the at least one interpolation correction value comprises at least one of a multiplication factor and a shift factor;
wherein obtain the distance by adjusting the interpolated distance with the at least one interpolation correction value comprises multiply the interpolated distance by the multiplication factor to create a product, and/or add the shift factor to either the product or to the interpolated distance.

9.  The apparatus of claims 6-8, wherein the obtaining and the using of the at least one interpolation correction value only occurs upon at least one of: the distance between the surface and the body is less than a distance threshold value and the body is taking off or landing.

10. The apparatus of claims 6-9 wherein using the interpolated distance, the at least one interpolation correction value is determined using an interpolation correction function;
wherein the interpolation correction function is obtained by taking a difference between (i) a function representing interpolated data over one or more ranges of bins and (ii) a linear bin relationship.

EP 4 671 809 A1

Vehicle <u>118</u>

Radar <u>100</u>

Transmitter
<u>102</u>

<u>111</u>

<u>111'</u>

<u>103</u>

Delay Circuit
<u>116</u>

106

<u>113</u>

117

Mixer
<u>104</u>

<u>112</u>

Processing
System  <u>105</u>

<u>119</u>

<u>111</u>
<u>113</u>
D

101

FIG. 1

Down
Converter
205-1

Processor
205-2

Memory
205-3

Processing System 205

FIG. 2

330

Transmit To A Surface, A FM CW or A Pulsed Linear FM Signal 330-1

Receive A Portion of The Signal Reflected from The Surface 330-2

Generate a Beat Signal 330-3

Transform The Beat Signal from A Time Domain into A Frequency Domain Comprising Bins Each of Which Has A Complex Value 330-4

Select, from Leading Edge Bins, of The Bins A Primary Leading Edge Bin which Corresponds to A Portion of The Surface which Is Closest to The Body 330-5

Determine An Interpolated Distance between The Surface and The Body by Interpolating within the Primary Leading Edge Bin 330-6

Either (a) Obtain A Distance by Adjusting The Interpolated Distance with at Least One Interpolation Correction Value; or
(b) Obtain The Distance when Determining The Interpolated Distance and Performing Interpolation Using The at Least One Interpolation Correction Value 330-7

FIG. 3

440

FIG. 4

Estimated Bin No. 550-1

552

X + 1.5

554

X + 1

558

X + 0.5

556

X

X - 0.5

Real Bin No. 550-2

X - 0.5      X      X + 0.5      X + 1      X + 1.5

FIG. 5

EP 4 671 809 A1

14

660

Obtain An Interpolation Function 660-1

Obtain Interpolation Correction Function 660-2

Obtain An Interpolation Correction Value 660-3

FIG. 6

770

Obtain An Interpolation Correction Value Including at Least One of A
Multiplication Factor and A Shift Factor  770-1

FIG. 7

Europäisches
Patentamt

European
Patent Office

Office européen
des brevets

# EUROPEAN SEARCH REPORT

**Application Number**

EP 25 18 0276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RESHMA S ET AL: "Improved Frequency Estimation Technique for FMCW Radar Altimeters", 2021 INTERNATIONAL CONFERENCE ON RECENT TRENDS ON ELECTRONICS, INFORMATION, COMMUNICATION & TECHNOLOGY (RTEICT), IEEE, 27 August 2021 (2021-08-27), pages 185-189, XP034001485, DOI: 10.1109/RTEICT52294.2021.9573544 [retrieved on 2021-10-13] * the whole document * ----- | 1-10 | INV. G01S7/35 G01S13/34 G01S13/88 |
| X | ANUJA CHAUDHARI ET AL: "Frequency estimator to improve short range accuracy in FMCW radar", 2015 INTERNATIONAL CONFERENCE ON ADVANCES IN COMPUTING, COMMUNICATIONS AND INFORMATICS (ICACCI), 1 August 2015 (2015-08-01), pages 640-644, XP055390414, DOI: 10.1109/ICACCI.2015.7275682 ISBN: 978-1-4799-8792-4 * the whole document * ----- | 1-10 | |
| A | ÇAGATAY CANDAN: "A Method For Fine Resolution Frequency Estimation From Three DFT Samples", IEEE SIGNAL PROCESSING LETTERS, IEEE, USA, vol. 18, no. 6, 1 June 2011 (2011-06-01), pages 351-354, XP011354758, ISSN: 1070-9908, DOI: 10.1109/LSP.2011.2136378 * the whole document * ----- -/-- | 1-10 | TECHNICAL FIELDS SEARCHED (IPC)<br><br>G01S |

The present search report has been drawn up for all claims

| Place of search | Date of completion of the search | Examiner |
|---|---|---|
| Munich | 15 October 2025 | Rudolf, Hans |

EPO FORM 1503 03.82 (P04C01)

page 1 of 2

Europäisches
Patentamt

European
Patent Office

Office européen
des brevets

# EUROPEAN SEARCH REPORT

**Application Number**

**EP 25 18 0276**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Eric Jacobsen: "On Local Interpolation of DFT Outputs", , 13 June 2002 (2002-06-13), pages 1-25, XP093325421, Retrieved from the Internet: URL:http://www.ericjacobsen.org/FTinterp.pdf * the whole document * | 1-10 | |

-----

TECHNICAL FIELDS
SEARCHED (IPC)

The present search report has been drawn up for all claims

| Place of search | Date of completion of the search | Examiner |
|---|---|---|
| Munich | 15 October 2025 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 10274596 B